# EUROPEAN PATENT APPLICATION

(11) **EP 1 755 336 A2**
(43) Date of publication of application: **21.02.2007**
(21) Application number: 06253812.9
(22) Date of filing: 20.07.2006
(51) Int. Cl.: H04N 5/76

(54) **Image display device and method of recording broadcasting program**

(30) Priority: 20.07.2005 KR 20050065824
(71) Applicant: LG Electronics Inc., Youngdungpo-Gu Seoul (KR)
(72) Inventor: Kim, Yong Chul, Seo-gu Gwangjoo-si (KR)
(74) Representative: Neobard, William John

(57) **Abstract**

An image display device and a method of recording broadcast program are provided. The image display device includes a signal processing unit receiving and processing a broadcast signal, a storage unit storing the broadcast signal, an outputting unit decoding and outputting the broadcast signal, and a control unit analyzing PID (program identification) information in the broadcast signal to determine whether a commercial broadcast is included in the broadcast signal or not, and controlling to record a selected broadcast program without the commercial broadcast.

## Description

The present invention relates to an image display device and a method of recording a broadcast program.

Consumers are more and more interested in a digital television using a digital transmission method.

The digital television has functions that record a broadcast program in real-time and play the recorded broadcast program at a desired time by using a personal video recorder (PVR) while watching the broadcast program.

A PVR system is a personal digital video recorder that records and plays information to and from a hard disk. Unlike VCRs that record an image signal on a magnetic tape, the PVR system is a new concept digital recorder that records and plays information to and from a hard disk. That is, the PVR system is a next generation recorder that can record a broadcast program with a large-sized data through a hard disk drive (HDD) built in a set top box or a television.

However, an image display device using a related art PVR system records a broadcast program with commercial broadcasts in a corresponding channel from a recording start point to a recording end point when using timer recording or directly inputting a recording command to record a broadcast program.

Especially, some content (e.g. advertisements or promotional information) is inserted between the recording start point and the recording end point in the broadcast program. Since the information on this content is not included in an electronic program guide (EPG) information, it is regarded as a portion of the broadcast program that will be recorded. Thus, the content is recorded along with the desired broadcast program.

Hence if a broadcast program which includes this content is recorded, the user watches, for example, unwanted commercial broadcasts, and also the capacity of storage medium such as a hard disk is wasted due to the commercial broadcasts.

Embodiments are directed to an image display device and a method of recording a broadcast program that substantially obviate one or more problems due to limitations and disadvantages of the related art.

An object of certain embodiments is to provide an image display device and a method of recording a broadcast program in which content such as commercial broadcasts, adverts and the like in a broadcast program are deleted or not stored using the image display device and the method. Thus, a user can watch the broadcast program without the commercial broadcasts, and also capacity of storage medium such as a hard disk can be saved.

According to one aspect there is provided an image display device including: a signal processing unit receiving and processing a broadcast signal; a storage unit storing the broadcast signal; an outputting unit decoding and outputting the broadcast signal; and a control unit analyzing PID (program identification) information in the broadcast signal to determine whether a commercial broadcast is included in the broadcast signal or not, and controlling to record a selected broadcast program without the commercial broadcast.

In another aspect, there is provided a method of recording a broadcast program, the method including: recording a broadcast signal; detecting and analyzing program identification information (PID) from a received broadcast signal; and not storing a transport stream (TS) packet of the PID according to the PID analysis result.

In a further another aspect, there is provided a method of recording a broadcast program, the method including: storing a broadcast signal; detecting and analyzing PID from the stored broadcast signal; and deleting a TS packet of the PID according to the PID analysis result.

In a still further aspect, there is provided a method of recording a broadcast program, the method including: storing a broadcast signal; analyzing the stored broadcast signal; and deleting a commercial broadcast in the broadcast signal according to the broadcast signal analysis result.

It is to be understood that both the foregoing general description and the following detailed description of the present invention are exemplary and explanatory and are intended to provide further explanation of the invention as claimed.

The accompanying drawings, which are included to provide a further understanding of the invention, illustrate embodiment(s) of the invention and together with the description serve to explain the principle of the invention. In the drawings:

Fig. 1 is a view of a configuration of an image display device;

Fig. 2 is a flowchart illustrating a method of recording a broadcast program in an image display device according to one embodiment; and

Fig. 3 is a flowchart illustrating a method of recording a broadcast program in an image display device according to another embodiment.

In the various figure, like reference signs indicate like parts.

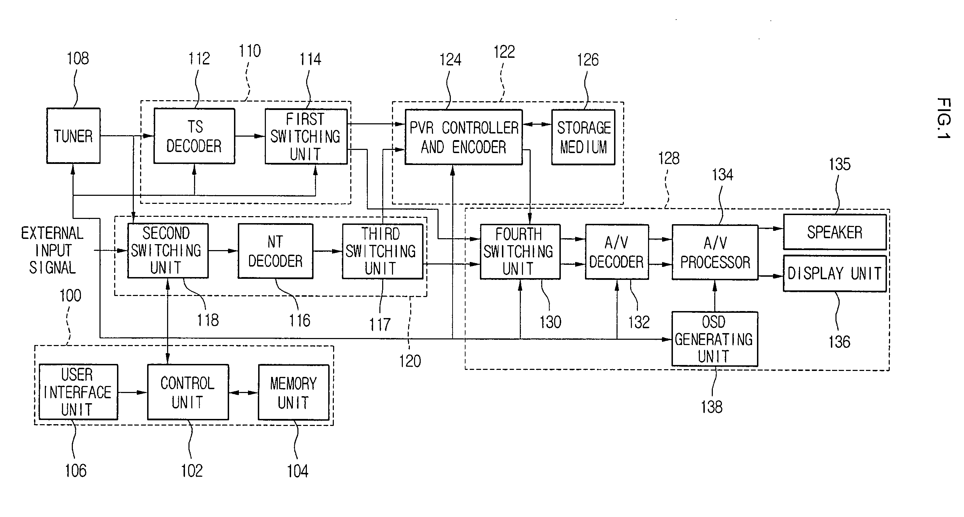

Referring to Fig. 1, an image display device, in this embodiment an NTSC receiver, includes a command processing unit 100, a tuner 108, a first signal processing unit 110, a second signal processing unit 120, a storage unit 122, and an outputting unit 128. The command processing unit 100 receives and processes commands such as switching a channel, recoding a broadcast program, plying a recorded broadcast program, etc. The tuner 108 selects and receives a channel that a user wants in broadcast signals. The first signal processing unit 110 receives and processes a digital broadcast signal in the broadcast signals received through the tuner 108. The second signal processing unit 120 processes an analog broadcast signal or an external input signal in the broadcast signals received through the tuner 108. The storage unit 122 stores the broadcast signals processed in the first signal processing unit 110 and the second signal processing unit 120. Moreover, the outputting unit 128 receives, processes, and outputs the broadcast signals processed in the first signal processing unit 110 and the second signal processing unit 120, and the broadcast signals played from the storage unit 122.

The command processing unit 100 includes a user interfacing unit 106 receiving user commands, a control unit 102 records a received broadcast signal or plays and outputs a recorded broadcast signal according to the command inputted through the user interfacing unit 106, and a memory unit stores various information such as a user information, a timer recording, etc.

The control unit 102 controls the first signal processing unit 110, the second signal processing unit 120, the storage unit 122, and the outputting unit 128 to manage storing and displaying broadcast programs as follows.

The first signal processing unit 110 includes a transport stream (TS) decoder 112 receiving and decoding a digital broadcast signal from the tuner 108, and a first switching unit 114 selectively outputs the signal decoded in the TS decoder 112 into the storage unit 122 and the outputting unit 128 according to a control signal of the controller 102.

Additionally, the second signal processing unit 120 includes a second switching unit 118 selecting an analog broadcast signal received from the tuner 108, and an external input signal inputted from external devices, an NT decoder 116 decoding the signal switched in the second switching unit 118, and a third switching unit 114 selectively outputting the signal decoded in the NT decoder 116 into the storage unit 122 or the outputting unit 128. The NT decoder 116 decodes NTSC signals.

The storage unit 122 includes a PVR controller and an encoder 124 receiving and encoding outputs of the first switching unit 114 or the third switching unit 117, and a storage medium 126 storing the signals encoded in the PVR controller and the encoder 124. The storage medium 126 can be formed of various medium such as a hard disk, non-volatile memory, etc.

The outputting unit 128 includes a fourth switching unit 130 selecting outputs of the first switching unit 114, the second switching unit 117, and the PVR controller and the encoder 124, an AV decoder 132 decoding audio and video signals selected from the fourth switching unit 130, an AV processor 134 processing the signal decoded in the AV decoder 132 to output sound and video, a speaker 135 outputting audio signals processed in the AV processor 134, a display unit 136 outputting a video signals processed in the AV processor 134, and an OSD generating unit 138 generating an on-screen display to select desired recording and playing conditions and to display recoding and playing state.

In the image display device, the control unit 102 analyzes a received broadcast signal to control broadcasts not to be stored in the storage medium 126, or to delete commercial broadcasts in the storage medium 126 while recording a broadcast program.

Program Specific Information (PSI) provides the program specification information for which program to select from a plurality of programs, which packet to select, and how to decode the selected packet. The PSI is formed of four tables.

The PSI is transmitted by a packet in which packet identifier is '0'. The PSI includes a program association table (PAT), a program map table (PMT), a conditional access table (CAT), and a network information table (NIT). The PAT includes a packet identifier value of the PMT describing components of each program. The PMT describes attachment information and a packet identifier list of a TS packet that is transmitted with a packet identifier number and each bit string of video, audio, etc., which constitute a program. The CAT is necessary for an authorized user to decode and play the bit string that is applied with scramble for playback restriction. The NIT includes physical network information of a region where information is received.

Embodiments identify commercial broadcasts from broadcast signals using the program identifier information to store the broadcast program without the commercial broadcasts in the storage medium 126.

That is, the control unit 102 extracts the program identification information from the broadcast signal that is separated from the TS decoder 112, and analyzes the program identification information (PID) information. The control unit 102 determines whether the program identification information (PID information corresponds to the commercial broadcasts or not such that TS packets (corresponding to the PID of the commercial broadcast) are not recorded. That is, when the commercial broadcasts are included in the broadcast program, they are not recorded.

In another embodiment, the control unit 102 extracts the PID information from the broadcast signal stored in the storage medium 126, and determines whether the PID information corresponds to the commercial broadcast or not, so as to delete the TS packet corresponding to the PID of the commercial broadcast. That is, only the commercial broadcasts in the stored broadcast program are deleted.

Operations of the image display device will be described.

First, the control unit 102 controls the tuner 108 to select a channel according to a power-on command inputted through the user interfacing unit 106.

The broadcast signal selected through the tuner 108 is inputted to the TS decoder 112 and then divided into video, audio, and broadcast information.

According to a command inputted through the user interfacing unit 106, the broadcast signal decoded in the TS decoder 112 can be stored in the storage medium 126.

The control unit 102 determines whether to record the broadcast program or not according to the PID information extracted from the broadcast signal. That is, when the commercial broadcast is identified by analyzing the PID information, the corresponding broadcast program is not stored in the storage medium 126.

Additionally, the control unit 102 extracts the PID information from the stored broadcast signals and analyzes the PID information to identify commercial broadcasts in stored broadcast program to delete the corresponding broadcast program in the storage medium 126.

Accordingly, when a user wants to record a specific broadcast program, commercial broadcasts in the broadcast program can be deleted to record the broadcast program without the commercial broadcasts.

On the other hand, the broadcast signals processed in the first signal processing unit 110 and the second signal processing unit 120, and the broadcast signal played in the storage unit 122 are processed to be outputted and displayed through the outputting unit 128.

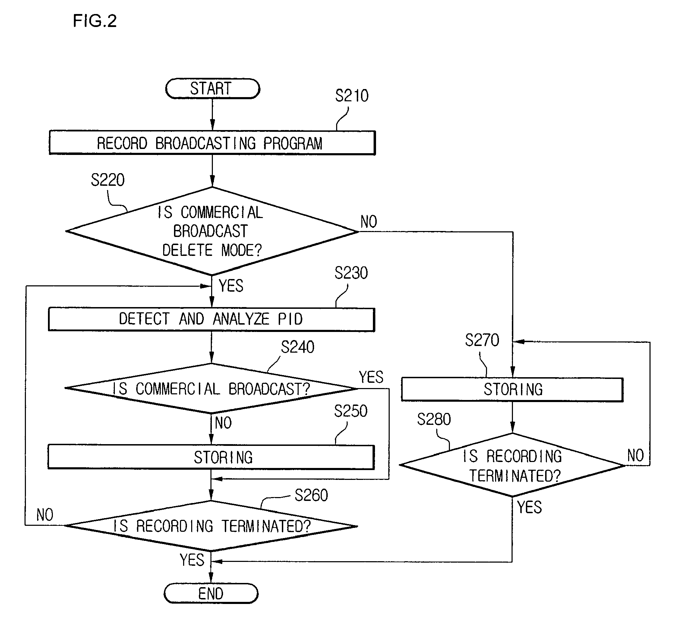

Referring to Fig. 2, when a recording command is inputted, a selected broadcast program is recorded in operation S210.

In operation S220, a commercial broadcast delete mode is performed according to a user selection or a manufacturing process setting of an image display device.

In operations S230 and S240, when the commercial broadcast delete mode is performed, the image display device detects PID from the received broadcast signal and determines whether the commercial broadcast is or not.

In operation S250, when the broadcast signal in recording is not the commercial broadcast, the broadcast program is stored in the storage medium, and when the broadcast signals in recording is the commercial broadcast, the broadcast program is not stored in the storage medium.

On the other hand, when the commercial broadcast delete mode is not performed, the broadcast program is stored in the storage medium without determining whether the commercial broadcast is or not in operation S270.

The recording of these broadcast signals continues until a recording end point in operations S260 and S280.

In the embodiment of Fig. 2, since the image display device detects and analyzes the PID of the broadcast signal to determine whether to record a broadcast program or not, the target broadcast program without the commercial broadcasts can be recorded.

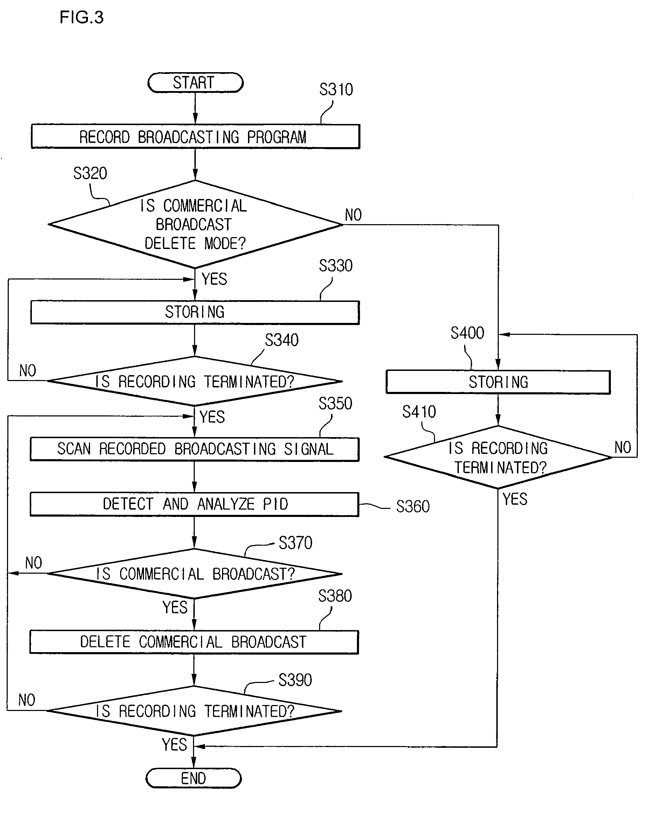

Referring to Fig. 3, when a recording command is inputted, the selected broadcast program is recorded in operation S310.

In operation S320, a commercial broadcast delete mode is performed according to a user selection or a manufacturing process setting of an image display device.

In operations S400 and S410, when the commercial broadcast delete mode is not selected, the selected broadcast program is stored until a recording end point.

In operations S330, S340, and S350, when the commercial broadcast delete mode is selected, the selected broadcast program is stored until the recording end point, and then the recorded broadcast signal is scanned.

Next, the image device detects the PID from the recorded broadcast signal and analyzes the PID to determine whether the commercial broadcast is or not in operations S380 and S390.

In operations S380 and S390, the recorded broadcast signals are scanned to delete the commercial broadcasts when the recorded broadcast programs include the commercial broadcasts.

On the other hand, after the recording, the broadcast signals are scanned using the method of recording the broadcast program as illustrated in Fig. 3. However, the present invention is not limited to scanning for the PID detection after the entire target broadcast program is stored in the storage medium.

That is, before completing the recording of the broadcast program, the broadcast signals that are already stored in the storage medium can be scanned to detect and analyze the PID. When the broadcast program includes the commercial broadcasts, a corresponding broadcast signal can be deleted.

According to the image display device and a method of recording a broadcast program, the commercial broadcasts in the target broadcast program may be deleted or not stored in the storage medium. Therefore, in embodiments, a user can watch the broadcast program without the commercial broadcasts, and also capacity of storage medium such as a hard disk can be saved.

The invention is not limited to recording broadcasts without interruption by commercials (for example, interrupted by news bulletins).

It will be apparent to those skilled in the art that various modifications and variations can be made in the present invention. Thus, it is intended that the present invention covers the modifications and variations provided they come within the scope of the appended claims.

## Claims

1. An image display device comprising:
a signal processing unit configured to receive and process a broadcast signal;
a storage unit configured to store the broadcast signal;
an outputting unit configured to decode and output the broadcast signal; and
a control unit configured to analyze program identification information included in the broadcast signal to determine whether commercial broadcast is included in the broadcast signal or not, and to cause control of a selected broadcast program without the commercial broadcast.

2. An image display device according to claim 1, wherein the control unit is configured to cause storage of the selected broadcast program without the commercial broadcast from the received broadcast signal in the storage unit.

3. An image display device according to claim 1, wherein the control unit is configured to delete the commercial broadcast from the broadcast signal stored in the storage unit.

4. An image display device according to claim 3, wherein the control unit is configured to delete the commercial broadcast from the broadcast signal stored in the storage unit after completing the broadcast program recording.

5. A method of recording a broadcast program, the method comprising:
recording a broadcast signal;
detecting and analyzing a program identifier from a received broadcast signal; and
depending on the result, not storing a transport stream packet.

6. A method according to claim 5, further comprising not storing the transport stream packet when the transport stream packet includes a commercial broadcast as a result of the analyzing of the program identifier.

7. The method according to claim 5 or 6, further comprising storing the transport stream packet when the analysis result is that the transport stream packet is a target broadcast program.

8. A method of recording a broadcast program, the method comprising:
storing a broadcast signal;
detecting and analyzing program identification information from the stored broadcast signal; and
deleting a transport stream packet depending on the result of the analysis.

9. A method according to claim 5 or 9, further comprising, before the recording of the broadcast signal, inputting a command for a recording mode selection.

10. A method according to claim 8 or 9, further comprising deleting the transport stream packet when the transport stream packet includes a commercial broadcast as a result of the analysis.

11. A method according to claim 8, 9 or 10, wherein the program identification is detected after storing the entire target broadcast signal.

12. The method according to claim 8,9 or 10, wherein the program identification is detected in a broadcast signal before completing entire target broadcast signal storing.

13. A method of recording a broadcast program, the method comprising:
storing a broadcast signal;
analyzing the stored broadcast signal; and
deleting a commercial broadcast in the broadcast signal depending on a result of the analyzing of the stored broadcast signal.

14. A method according to claim 13, wherein the analyzing of the stored broadcast signal comprises analyzing program identification information.

15. A method according to claim 14, wherein the program identification is analysed after completing entire target broadcast signal storing.

16. The method according to claim 15, wherein the program identification is analysed from a broadcast signal before completing entire target broadcast signal storing.
